# EUROPEAN PATENT APPLICATION

(11) **EP 3 591 159 A1**
(43) Date of publication of application: **08.01.2020**
(21) Application number: 19184240.0
(22) Date of filing: 03.07.2019
(51) Int. Cl.: E06B 1/60, E06B 1/68

(54) **WINDOW FRAMES**

(30) Priority: 03.07.2018 GB 201810912
(71) Applicant: Selecta Systems Limited, Sutton Coldfield, West Midlands B73 5UB (GB)
(72) Inventor: GREEN, Andrew Jonathan, Staffs WS7 9EA (GB); WEIHE, Maximilian, B44 9EH Great Barr (GB)
(74) Representative: Barker Brettell LLP

(57) **Abstract**

A kit for use with a profile forming a window frame mounted in an opening in a wall, the kit comprising an adapter member and a trim member, the adapter member being adapted for attachment to the window frame profile and providing a projection away from the frame, the projection having a channel, and the trim member having a mounting part secured in the channel and a surround part for engagement with the end of the projection and the wall.

## Description

This invention relates to window frames, and in particular window frames for caravans, mobile homes and the like.

Caravans and older mobile homes have relatively thin walls. The conventional way of installing a window frame in such a construction is to create an opening in a wall, and drill apertures through the wall round the opening. The window frame is then inserted into the opening from one side, and fasteners are inserted into the apertures from the other side to secure the frame to the wall. The fasteners are therefore visible, unless a trim is used to conceal them. This adds to the cost and the installation time.

This problem arises whether the windows are single or double glazed. If existing windows of a caravan or mobile home are to be updated to double glazing, it may be difficult to use standard double glazing profiles to form the window frames, because the walls are not a standard thickness.

Frame profiles can be made specifically for double glazing for thin walls, but these are expensive, and as the frames have to be attached in the conventional way, the fasteners are still visible, unless the concealing trim is also used.

According to the invention, we provide a kit for use with a profile forming a window frame mounted in an opening in a wall, the kit comprising an adapter member and a trim member, the adapter member being adapted for attachment to the window frame profile and providing a projection away from the frame, the projection having a channel, and the trim member having a mounting part secured in the channel and a surround part for engagement with the end of the projection and the wall.

The adapter member can fit a standard double glazing profile, and provides a mounting for the trim member which extends beyond the frame. The trim member is secured in the channel by the mounting part and the surround engages with the wall, such that the frame is a compression fit on the wall between the surround part and the opposite edge of the frame, in order to secure the frame in the opening. The kit is easy to use, inexpensive, and enables the use of standard frame profiles.

The adapter member is preferably an elongate member. It may be extruded from plastics material, and in particular the same plastics as the frame profile. Alternatively, it may be of aluminium. It is preferably attached to the frame profile, by adhesive or by suitable fasteners, or it may snap or clip onto the frame profile. The inner side of the adapter member, that is, the side adjacent the profile in use, is preferably contoured to fit the frame profile. The opposite, outer side is substantially flat for engagement with the wall portion defining the opening.

The projection of the adapter member conveniently extends perpendicularly from the frame. The projection may have a flat free end, with the channel formed along the length of the free end. The channel may be formed with internal longitudinal ridges to grip the mounting part of the trim member.

The trim member is also an elongate member of metal or plastics. The mounting part may be formed with external longitudinal ridges corresponding to the ridges on the channel, in order to enhance the connection between the adapter member and the trim member.

The surround part conveniently has a first portion engaging with the free end of the projection of the adapter member and a second portion substantially parallel to and engaging with the wall. The first and second portions may form a continuous arm so that the trim member is substantially L-shaped. This embodiment may be used where the thickness of the wall is substantially the same as the width of the frame and the adapter member. For thicker walls an alternative embodiment may be used, where the first and second portions of the surround member are separated by a perpendicular flange extending across the wall portion defining the opening. The length of the flange is chosen to suit standard wall thicknesses. Typically, two lengths will be sufficient, so that in all three trim members can accommodate most situations.

In use, once the window frame has been assembled, the adapter member is cut to size, mitred at the corners like the frame, and attached to the frame. The frame is then inserted into the opening in the wall from the outside, and secured by the trim member (also cut to size and mitred), inserted into the channel, far enough to compress the wall between the second surround portion and the frame on the outside of the wall. The ridges ensure that the trim member is attached securely.

Embodiments of the invention are illustrated, by way of example only, in the accompanying drawings, in which:-
**Figure 1** is a section through a window frame profile attached to a wall in a conventional manner;
**Figure 2** is an end view of adapter member of an adapter kit for the profile of Figure 1;
**Figure 3** is an end view of a trim member of the kit of Figure 2;
**Figure 4** is a section through the profile, the adapter member and the trim member in use; and
**Figure 5** is a view of a modified trim member.

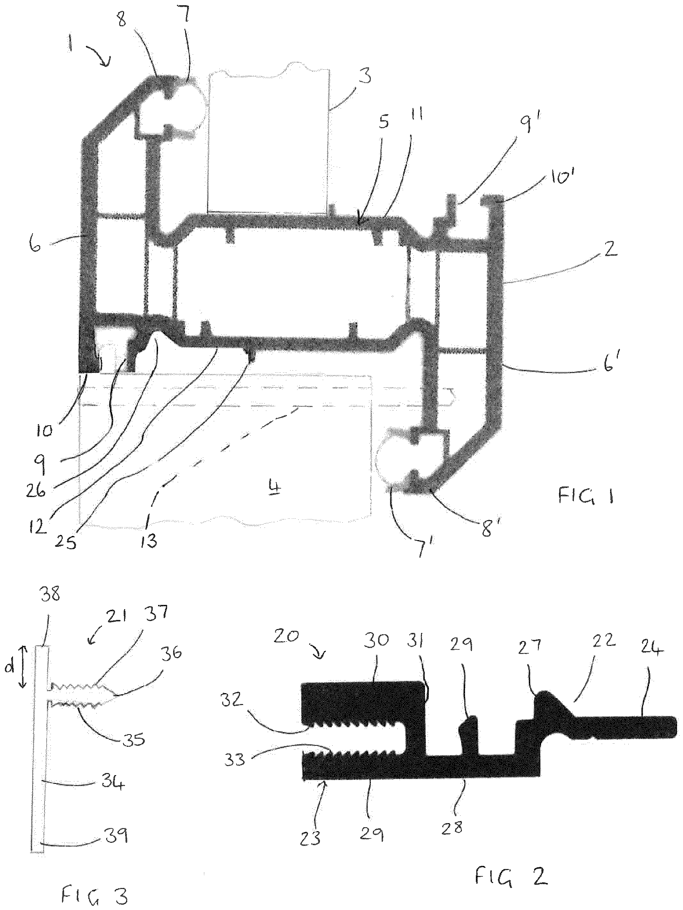

Figure 1 shows a section through a profile 1 for a window frame 2 used to mount double-glazing units 3. The frame 2 is mounted in an opening in a wall 4.

The profile 1 is extruded from aluminium, or a plastics material such as uPVC, and is a Z-shape, being rotationally symmetrical. The profile is of a standard size of 70 to 80 mm. In Figure 1 the profile 1 is shown as a bottom member of the frame 2, with the left-hand side being the interior of the wall 4 and the right-hand side the exterior. The profile 1 has a central portion 5 and an arm 6, 6¹ at each end of the central portion 5, with the arms 6, 6¹ extending in opposing directions. Each arm 6, 6¹ carries a respective bubble gasket 7, 7¹ at its outer end 8, 8¹ and has an open channel 9, 9¹ at its inner end 10, 10¹.

The double-glazing unit 3 abuts an inner edge 11 of the central portion 5, and is sealed at its inside by the bubble gasket 7 on the upstanding arm 6. The outside of the double-glazing unit 3 is sealed by a glazing bead (not shown) clipped into the channel 10¹ on the arm 6¹. An outer edge 12 of the central portion 5 engages the wall 4, with the bubble gasket 7¹ on the depending arm 6¹ sealing against the wall 4.

In a typical construction, the frame 2 is fixed in the opening by screws 13 (shown in dashed lines) passing through the wall 4 and into the arm 6¹. The heads of the screws are then concealed by a trim member (not shown), attached to the wall 4 by adhesive.

The adapter kit of Figures 2 and 3 is used to secure the frame 2 in the opening without the use of screws or other fasteners. The adapter kit comprises an adapter member 20 as shown in Figure 2, together with a trim member 21, as shown in Figure 3.

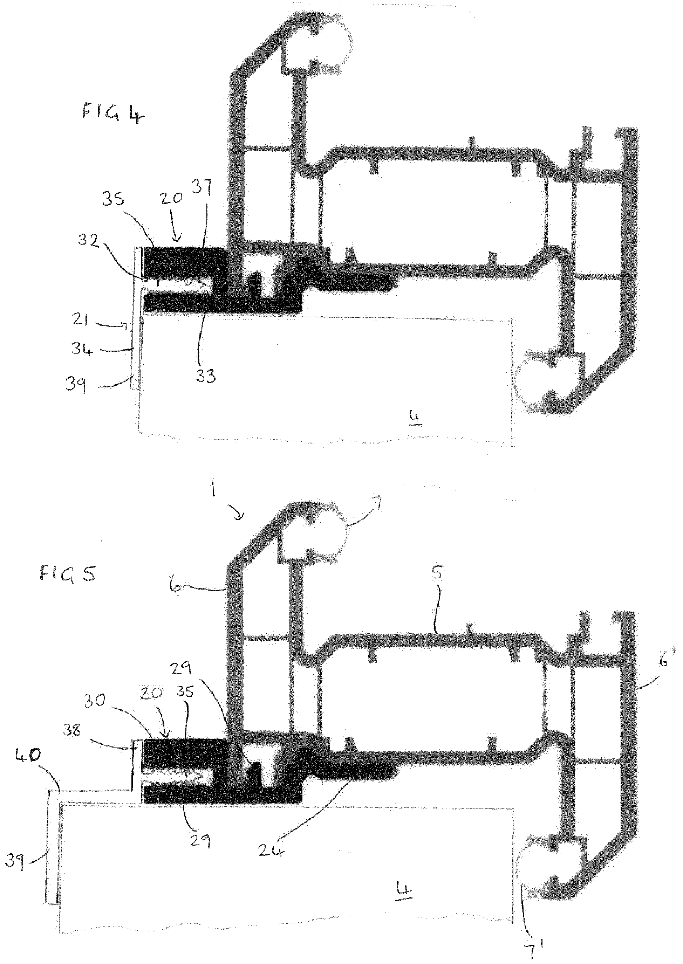

The adapter member 20 is an elongate member extruded from plastics material. It fits onto the profile 1 as shown in Figure 4 over an open channel 9, 9¹ and has a part 22 accommodated within the profile 1, and a projection part 23 extending away from the profile 1. The part 22 accommodated within the profile 1 is of stepped outline corresponding to the contours of the profile 1. An end portion 24 is flat and adapted to engage the profile 1 between an abutment 25 and a groove 26 on the profile, an intermediate portion 27 engages in the groove 26 and abuts the side of the open channel 9, 9¹, and a second end portion 28 closes the open channel 9, 9¹. The second end portion 28 has a projection 29 adapted to be received in the channel 9, 9¹. Although the inner surface of the part 22 corresponds to outline of the profile 1, the outer surface is flat.

The projection part 23 extending away from the profile 1 is U-shaped. A first arm 29 is contiguous with the second end portion 28, while a second arm 30 is parallel to the first arm 29, the two arms 29, 30 being joined by a base 31 which engages the side of the arm 6, 6¹ of the profile 1. The free ends of the arms 29 and 30 are flat and in the same plane.

The first and second arms 29, 30 and base 31 define a channel 32 extending along the length of the projection 23. The facing surfaces of the arms 29, 30 are formed with longitudinal ridges forming teeth 33. As can be seen in Figure 2, the teeth 32 are inclined towards the base 31.

The trim member 21, as shown in Figure 3, is also an elongate member, which is extruded from aluminium or plastics material. It is substantially L-shaped, or t-shaped, with a longer arm 34 and a shorter arm 35 projecting from the longer arm 34 at right-angles. The shorter arm 35 is a mounting part adapted to fit into the channel 32 in the adapter member 20. The shorter arm 35 has a pointed free end 36 and longitudinal ridges forming teeth 37 adapted to co-operate with the teeth 33 in the channel 32 in order to retain the shorter arm 35 in the channel 32. The longer arm 34 is a flat member, forming a surround part. It will be noted that the shorter arm 35 projects not from an end of the longer arm 34, but from part way along it. The surround part is effectively divided into a first portion 38 and a second portion 39. The first portion 38 has a length corresponding to the thickness of the projection 34. The length of the second portion 39 is chosen so that it has a significant length for engagement with the wall 4. Thus, when the adapter member 20 and the trim member 21 are assembled, the first portion 38 covers the free ends of the arms 29, 30 to conceal the end of the projection part 23, and the second portion 39 is in engagement with the wall 4.

Figure 4 shows the adapter member 20 and the trim member 21 in use on the profile 1.

For use, a window frame will be assembled from lengths of profile 1, mitred and joined at the corners, and with bubble gaskets 7, 7¹ inserted. Lengths of the adapter member 20 will be cut to size and mitred to form an adapter frame. The adapter frame lengths and the window frame will then be assembled together and secured, for example by adhesive, although any suitable fastening may be used.

The frame and adapter frame are then inserted into the opening in the wall 4 from the outside. Lengths of the trim member 21 are then cut to size with mitred corners, and the shorter arms 35 inserted in the channels 32 of the adapter member frame. The longer arms 34 extend substantially parallel to the wall 4, with the surround part engaging the adapter member 20 and the wall 4. The shorter arms 34 are inserted such that the wall 4 is compressed slightly between the second portions 39 of the surround part and the arms 6¹ of the frame to secure the frame in the opening.

Figure 5 shows an alternative trim member 21 for use with thicker walls. The mounting part 35 is the same, while the surround part is modified. The surround part still has the first and second portions 38, 39, but instead of being continuous and being in a single plane, they are connected by a perpendicular flange 40. When the trim member 21 is assembled in the adapter member 20 the flange 40 forms an extension of the first arm 29 of the adapter member 20 and conceals the opening in the wall 4. As before, in use the first surround portion 38 engages the ends of the arms 29, 30 to conceal the end of the projection part 23 and second surround portion 39 engages the wall 4. Assembly of the frame and adapter kit is the same as described above.

In further embodiments (not shown) the length of the flange 40 may be varied to accommodate different wall thicknesses. In practice it has been found that three trim members and two standard profiles will accommodate most wall thicknesses.

It will be appreciated that the finish and the material of the trim member 21 may be chosen for their aesthetic appearance.

## Claims

1. A kit for use with a profile forming a window frame mounted in an opening in a wall, the kit comprising an adapter member and a trim member, the adapter member being adapted for attachment to the window frame profile and providing a projection away from the frame, the projection having a channel, and the trim member having a mounting part secured in the channel and a surround part for engagement with the end of the projection and the wall.

2. A kit as claimed in claim 1, in which the adapter member is an elongate member.

3. A kit as claimed in claim 1 or claim 2, in which the inner side of the adapter member, that is, the side adjacent the profile in use, is contoured to fit the frame profile.

4. A kit as claimed in claim 3, in which the opposite, outer side is substantially flat for engagement with the wall portion defining the opening.

5. A kit as claimed in any preceding claim, in which the projection of the adapter member extends perpendicularly from the frame.

6. A kit as claimed in claim 5, in which the projection has a flat free end, with the channel formed along the length of the free end.

7. A kit as claimed in any preceding claim, in which the channel is formed with internal longitudinal ridges to grip the mounting part of the trim member.

8. A kit as claimed in any preceding claim, in which the trim member is an elongate member.

9. A kit as claimed in any preceding claim, in which the mounting part is formed with external longitudinal ridges,

10. A kit as claimed in any preceding claim, in which the surround part has a first portion engaging with the free end of the projection of the adapter member and a second portion substantially parallel to and engaging with the wall.

11. A kit as claimed in claim 10, in which the first and second portions form a continuous arm so that the trim member is substantially L-shaped.

12. A kit as claimed in claim 10, in which the first and second portions of the surround member are separated by a perpendicular flange extending across the wall portion defining the opening.
